# DEMANDE DE BREVET EUROPEEN

(11) **EP 1 529 965 A2**
(43) Date de publication de la demande: **11.05.2005**
(21) Numéro de dépôt: 04300553.7
(22) Date de dépôt: 23.08.2004
(51) Int. Cl.: F16B 2/16, E05B 63/12, B60N 2/015

(54) **Dispositif de fixation de deux éléments**

(30) Priorité: 06.11.2003 FR 0313038
(71) Demandeur: Renault s.a.s., 92100 Boulogne Billancourt (FR)
(72) Inventeur: Guerlin, Philippe, 91540, Mennecy (FR); Lallement, Stéphane, 28130, Pierres (FR); Le Glaunec, Yann, 92130, Issy les Moulineaux (FR)

(57) **Abrégé**

Dispositif de fixation entre deux éléments formés d'un premier élément (1), portant un axe (4), et d'un second élément (2), caractérisé en ce que le second élément (2) comporte au moins trois billes (9) agencées de manière à exercer une pression suffisante sur l'axe (4) de façon à le rendre solidaire du second élément (2).

## Description

La présente invention a pour objet un dispositif de fixation de deux éléments, et plus particulièrement, elle un dispositif de fixation d'un siège sur le plancher d'un véhicule automobile.

Un siège de véhicule automobile est, généralement, fixé directement sur le plancher du véhicule, ou tout élément solidaire du plancher, au moyen de vis. Eventuellement, le siège peut comporter des glissières qui coopèrent avec des coulisses. Dans ce cas, ce sont les glissières qui sont fixées sur le plancher, ou tout élément solidaire du plancher, au moyen de vis.

L'utilisation de vis, ou de tout système de boulonnerie classique, présente des inconvénients. Elle nécessite, en particulier, de prévoir suffisamment d'espace pour permettre l'accès du dispositif de vissage aux moyens de fixation. C'est pourquoi, de préférence, il est fait recours à des dispositifs de fixation ne comportant pas de vissage, ou, le limitant à des zones faciles d'accès, dès que l'on souhaite obtenir des dispositifs de fixation rapide. De tels dispositifs, par exemple du type «clipsage», permettent un montage simple et rapide des pièces entre elles,

Par la publication US-A-S697727, on connaît un dispositif du type «clipsale, », dans lequel la paroi du plancher du véhicule est prise, en étau par un second élément. La paroi supérieure du plancher sert d'appui à une première pièce, tandis que des billes rétractables prennent appui sur la face inférieure du plancher.

Le dispositif, selon cette publication, comporte de multiples pièces différentes susceptibles d'en rendre difficile et coûteuse la réalisation. De plus, la zone de pincement du plancher est relativement réduite et subit donc des contraintes importantes, ce qui peut rendre la présence d'un renforcement dans cette partie du plancher.

Afin de pallier ces inconvénients l'invention a pour objet un dispositif de fixation d'un premier élément, portant un axe et d'un second élément qui permettre une fixation rapide et sûre, tout en étant de réalisation simple et économique.

L'invention a également pour objet un moyen de fixation de deux éléments pouvant être démontables.

Selon une caractéristique de l'invention, le second élément comporte au moins trois billes agencées de manière à exercer une pression suffisante sur l'axe de façon à le rendre solidaire du second élément.

Selon une autre caractéristique de l'invention, le second élément est porté une butée dans laquelle est réalisé un lamage contenant les billes, ledit lamage comprenant une partie dont la section initiale est inférieure à la section finale et en ce que le déplacement de l'axe , de la section initiale vers la section finale, entraîne le déplacement des billes , dans le même sens, le long d'une paroi du lamage, de façon à ce qu'elles s'éloignent d'une droite. D, jusqu'à être en contact avec une paroi latérale de l'axe, et en ce que, lorsque les billes sont en contact avec ladite paroi latérale de l'axe, elles exercent une pression suffisante sur l'axe pour s'opposer à un déplacement dudit axe en sens inverse.

Selon une autre caractéristique de l'invention, un ressort s'appuie sur les billes de façon à ce qu'elles soient en appui, sous l'action seule du ressort, contre une paroi du lamage sensiblement au niveau de la section initiale.

Selon une autre caractéristique de l'invention, la partie du lamage de la butée, dont la section, initiale est inférieure à la section finale, comporte une portion tronconique.

Selon une autre caractéristique de l'invention, le ressort est supporté par un carter, fixé à l'élément, par l'intermédiaire d'une base d'une cage dont l'autre extrémité s'appuie sur la butée.

Selon une autre caractéristique de l'invention, le ressort s'appuie sur les billes par l'intermédiaire d'un bord recourbé d'une cuvette qui comporte un fond de cuvette, de façon à ce qu'une poussée exercée sur le fond de cuvette comprime le ressort.

Selon une autre caractéristique de l'invention, l'axe comporte un alésage dans lequel peut se déplacer un second axe de façon à exercer une poussée sur le fond de cuvette en sortant en saillie de l'extrémité du premier axe.

Selon une autre caractéristique de l'invention, l'alésage est fileté, et le second axe est une vis filetée.

Selon une autre caractéristique de la cage comporte sur sa base, une ouverture de guidage de la cuvette.

Selon une autre caractéristique de l'invention, le carter comporte une ouverture de guidage de la cuvette.

Selon une autre caractéristique de l'invention, le premier élément est une glissière de siège et le second élément un plancher de véhicule automobile.

D'autres caractéristiques et avantages de l'invention apparaîtront à la lecture de la description qui va suivre d'un mode de réalisation d'un dispositif de fixation de deux éléments, donné à titre d'exemple non limitatif, en référence aux dessins annexés dans lesquels :
- la figure 1 représente une vue éclatée du dispositif selon l'invention,
- les figures 2 , 3, 4 et 5 représentent différentes étapes successives lors de la fixation des deux éléments.

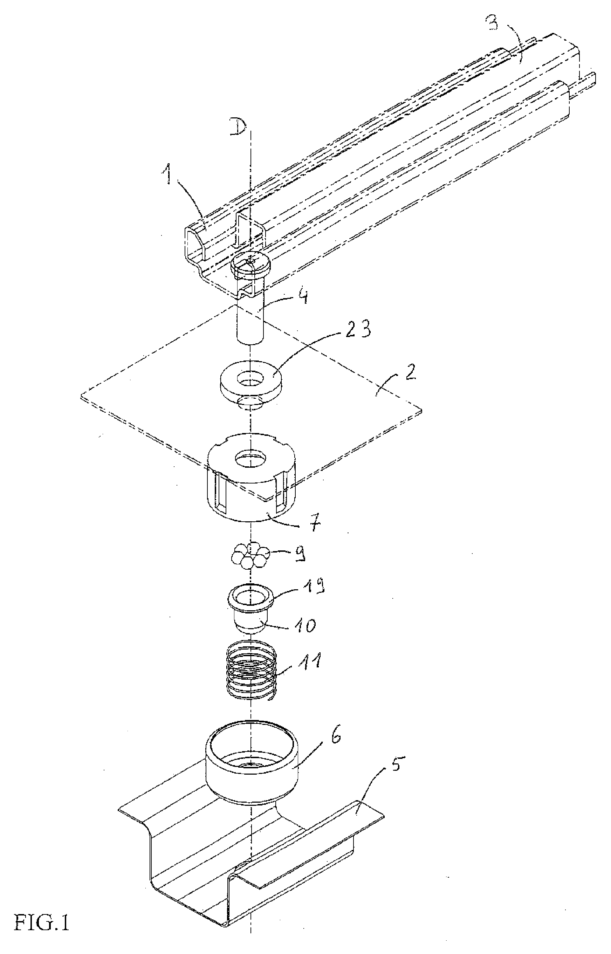

La figure 1 représente les deux éléments à fixer, une glissière 1, et une paroi 2 qui comporte une face 12. Sur la glissière 1 vient coopérer une coulisse 3. La paroi 2 peut être directement celle du plancher du véhicule automobile, ou bien la paroi de n'importe quel élément rapporte sur le plancher du véhicule automobile. Dans le cas où le siège ne comporte pas de coulisses 3 susceptibles de coopérer avec des glissières 1, l'élément 1 pourra être n'importe quelle pièce, solidaire du siège, ou bien le siège lui-même.

Sur la glissière 1 est fixé un axe 4, de droite axiale D, qui comporte une extrémité terminale 20. Cet axe 4 peut, par exemple, être monté serré dans la glissière 1. Une rondelle 23 servant d'entretoise peut alors être placée la glissière 1 et la paroi 2. Cet axe 4 peut aussi comporter près de sa base une partie filetée qui permet, en utilisant un écrou 23, en lieu et place de la rondelle, de rendre l'axe 4 solidaire de la glissière 1.

L'axe 4 est, préférentiellement, lisse sur la majeure partie de sa longueur.

Sur la face 12 de la paroi 2 opposée à la glissière 1, est fixé un carter 5. Ce carter supporte une cage 6, sur laquelle est montée une butée 7. Cette butée 7 est, elle-même, liée à la face 12 de la paroi 2. Le carter 5 peut être fixé sur la paroi 2 par n'importe quel moyen connu, par exemple, par soudure.

La cage 6 a la forme d'un cylindre creux. Elle est en partie fermée à une extrémité par une base 16 qui peut comporter une ouverture, 24.

La butée 7 est de forme sensiblement cylindrique. Elle est traversée par un alésage. Cet alésage peut se diviser en trois parties. Une première partie cylindrique 13, une deuxième partie torique 14, et enfin, une troisième partie formant un lamage tronconique divergent 15. La butée 7 est placée de façon à ce que la partie cylindrique 13 se trouve en vis-à-vis par rapport à une ouverture circulaire 8 réalisée dans la paroi 2.

A l'intérieur de la butée 7 sont placées des billes 9. Lorsque l'axe 4 n'est pas inséré dans la butée 7, les billes 9 sont maintenues en appui contre les parois de ia partie torique 14 sous l'action d'un ressort 11, qui prend appui sur la base 16 de la cage 6. L'ouverture 24, réalisé dans la base 16 de la cage, comporte un rebord recourbe 17 pouvant effectuer le centrage du ressort 11. Le ressort 11 peut être, un ressort cylindrique ou bien un ressort conique. Le ressort 11 peut être remplacé par d'autres type de moyens élastiques.

Dans le mode de réalisation, non limitatif, de l'invention représenté sur les figures 1 à 5, six billes 9 ont utilisées. Il est toutefois possible d'envisager un nombre supérieur ou inférieur de billes 9. Le nombre de billes 9 doit simplement être suffisant pour que l'ensemble des billes 9 puissent avoir, sous l'action du ressort 11, une position d'équilibre stable contre la partie torique 14 de l'alésage. Pratiquement, au moins trois billes 9 doivent être utilisées.

L'action du ressort 11 sur les billes 9, peut s'exercer par l'intermédiaire d'une cuvette 10. Cette cuvette 10 se compose d'une partie cylindrique fermée à une extrémité par un fond de cuvette 18. L'extrémité libre de la cuvette comporte un bord recourbé 19. Une face de ce bord 19 recourbé sert d'appui au ressort 11, tandis que l'autre repose, sur les billes 9 auxquelles elle transmet l'action du ressort 11.

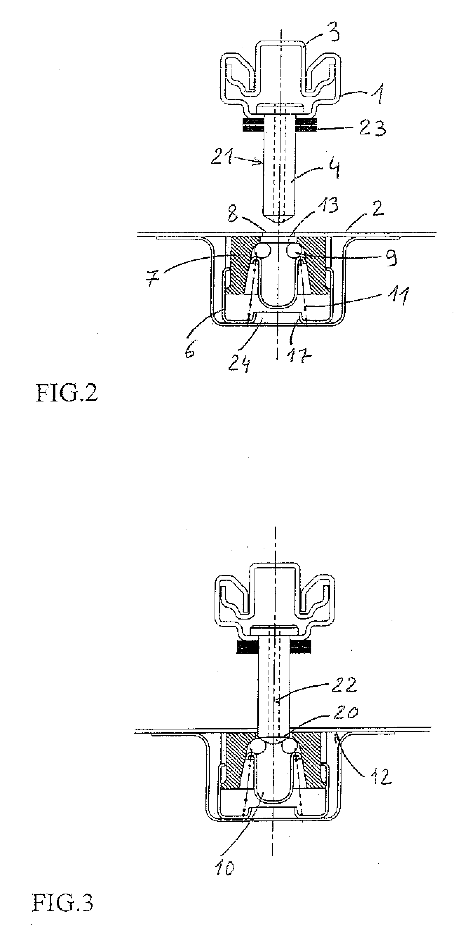

La fixation des éléments 1 et 2 se fait de la façon suivante. L'axe 4 est amené en position, à la verticale de l'ouverture 8 de la paroi 2 (figure 2). L'axe 4 est alors poussé à l'intérieur de l'ouverture 8 et de la partie cylindrique 13 de l'alésage de la butée 7, dont le diamètre est, lui, légèrement supérieur à celui de l'ouverture 8.

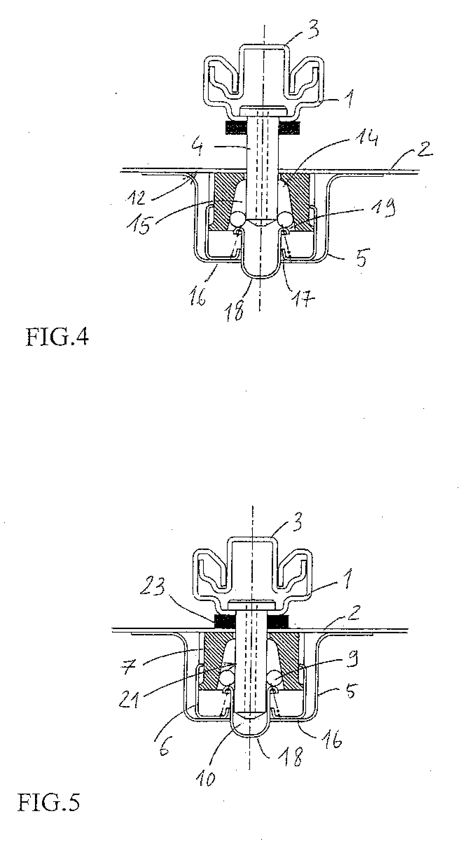

L'extrémité 20 de l'axe 4 entre alors en contact avec les billes 9 (figure 3). L'effort donné, à l'axe 4 est transmis aux billes 9 et s'oppose à la résistance du ressort 11. Si la poussée exercée sur l'axe 4 est suffisante, le ressort 11 va se comprimer et les billes 9 vont commencer à se déplacer radialement pendant leur descente qui accompagne la translation de l'axe 4,

L'extrémité 20 de l'axe 4 est réalisée de telle façon que la direction de l'effort, résultant, exercée par l'axe 4 sur les billes 9, tende à les faire rester en contact avec la paroi 15 du lamage. Dans le présent mode de réalisation de l'invention, l'extrémité 20 de l'axe 4 est un tronc de cône ou une partie sphérique.

Sur la figure 4, on peut voir une étape où l'axe 4 est à mi-course. Comme les billes 9 ont suivi les parois de la partie tronconique divergente 15 du lamage, elles se sont toutes écartées de l'axe D. La figure 4 représente l'étape où les billes 9 ne sont plus en contact avec l'extrémité 20 de l'axe, mais commence à être en contact avec une paroi 21 de l'axe,

A partir de ce moment, si l'on continue à exercer une poussée sur l'axe 4, l'effort transmis aux billes 9 l'est par l'intermédiaire des frottements entre la paroi 21 de l'axe 4 et lesdites billes 9. Les efforts résultants, dans une direction parallèle à la droite D, ne sont plus suffisants pour s'opposer à l'action du ressort 11. Néanmoins, la géométrie de la partie tronconique divergente 15 s'oppose à une détente du ressort 11. Les billes 9 se maintiennent donc sensiblement dans une même position représentée à la figure 3, tandis que l'axe 4 continue sa progression.

Au delà de l'étape représentée sur la figure 4, il n'est plus possible d'effectuer le mouvement inverse pour retirer l'axe 4. L'axe 4 est alors verrouillé.

En effet, supposons que l'on exerce, à l'étape représenté sur la figure 5 par exemple, une traction sur l'axe 4. Par le biais des frottements entre la paroi 21 de l'axe 4 et les billes 9, une partie de l'effort de traction est transmis aux billes 9. Or la géométrie de la partie tronconique divergente 15 induit alors un déplacement des billes 9 en direction du centre de l'axe 4, ce qui provoque un coincement dudit axe 4, Tout mouvement de translation des billes 9 est alors impossible dans le sens de libération de l'axe 4. La pression exercée par le ressort 11 sur les billes 9 par l'intermédiaire de la cuvette 10 accentue cet effet de coincement.

Si les matériaux utilisés pour la confection des billes 9, de l'axe 4 et de la butée 7, ainsi que les traitements de surface, réalisés sur ces différentes pièces, sont tels que les forces de frottements engendrées sont importantes, il sera très difficile de retirer l'axe 4 sans exercer une contrainte qui risque de déformer une des pièces de l'assemblage. L'axe 4 peut donc être considéré comme verrouillé.

La libération de l'axe 4 peut être réalisée de la façon suivante. Sur les différentes figures 2 à 5, l'axe 4 est représenté comportant un alésage centré 22 qui le traverse de part en part. Il est possible, en utilisant cet alésage 22, de faire sortir en saillie, à l'extrémité 20 de l'axe, une pièce, non représentée. Cette pièce peut être elle-même un axe lisse, ou bien fileté. Lorsque cette pièce sort suffisamment en saillie de l'extrémité 20, elle s'appuie sur le fond de cuvette 18, et exerce une pression sur celui-ci.

La cuvette. 10 s'appuyant sur le ressort 11, celui-ci va alors commencer à se comprimer. Les billes 9 ne sont plus alors retenues par le ressort 11 contre la paroi 21 de l'axe. Si aucun effort de traction n'est, à ce moment, exercé sur l'axe 4, les billes 9 ont tendance, sous la simple action de la gravité, à rester sur le bord recourbé 19 de cuvette 18 et donc à suivre le mouvement, du ressort 11. Les billes 9 s'éloignent, par la même occasion des parois 21 de l'axe. Les forces s'opposant au retrait de l'axe 4 ne sont plus présentes et les deux éléments 1 et 2 peuvent être séparés.

Le verrouillage des deux éléments, 1 et 2, étant assuré par les forces de frottements apparaissant entre la butée 7, les billes 9, et l'axe 4, l'aspect des surfaces et les matériaux utilisés sont de première importance.

Il peut être prévu des aménagements particuliers (non représentés) par exemple, des ouvertures dans la butée 7, afin d'aider les billes 9 à descendre et quitter le contact avec l'axe 4.

Par exemple, il est possible de choisir un axe comportant une granulosité spécifique de façon à obtenir des forces de frottement adaptées. Un critère, de sélection peut être les efforts de traction susceptibles d'être appliqués sur l'axe 4, c'est-à-dire sur le siège, lors de son utilisation ultérieure.

## Revendications

1. Dispositif de fixation entre deux éléments formés d'un premier élément (1), portant un axe (4), et d'un second élément (2), **caractérisé en ce que** le second élément (2) comporte au moins trois billes (9) agencées de manière à exercer une pression suffisante sur l'axe (4) de façon à le rendre solidaire du second élément (2).

2. Dispositif selon la revendication 1, **caractérisé en ce que** le second élément (2) est porté par une butée (7) dans laquelle est réalisé un lamage contenant les billes (9), ledit lamage comprenant une partie (14,15) dont la section initiale est inférieure à la section finale et **en ce que** le déplacement de l'axe (4), de la section initiale vers la section finale, entraîne le déplacement des billes (9), dans le même sens, le long d'une paroi du lamage, de façon à ce qu'elles s'éloignent d'une droite D, jusqu'à être en contact avec une paroi latérale (21) de l'axe (4), et **en ce que**, lorsque les billes (9) sont en contact avec ladite paroi latérale (21) de l'axe, elles exercent une pression suffisante sur l'axe (4) pour s'opposer à un déplacement dudit axe (4) en sens inverse.

3. Dispositif de fixation selon la revendication 2, **caractérisé en ce qu'**un ressort (11) s'appuie sur les billes (9) de façon à ce qu'elles soient en appui, sous l'action seule du ressort (11), contre une paroi du lamage sensiblement au niveau de la section initiale.

4. Dispositif de fixation selon l'une quelconque des revendications 2 ou 3, **caractérisé en ce que** la partie (14,15) du lamage de la butée (7), dont la section initiale, est inférieure à la section finale, comporte une portion tronconique (15).

5. Dispositif de fixation selon l'une quelconque des revendications 3 ou 4, **caractérisé en ce que** le ressort (11) est supporté par un carter (5), fixé à l'élément (2), par l'intermédiaire d'une base (16) d'une cage (6) dont l'autre extrémité s'appuie sur la butée (7).

6. Dispositif de fixation selon l'une quelconque des revendications 3 à 5, **caractérisé en ce que** le ressort (11) s'appuie sur les billes (9) par l'intermédiaire d'un bord recourbé (19) d'une cuvette (9) qui comporte un fond de cuvette (18), de façon à ce qu'une poussée exercée sur le fond de cuvette (18) comprime le ressort (11).

7. Dispositif de fixation selon la revendication 6, **caractérisé en ce que** l'axe (4) comporte un alésage (22) dans lequel peut se déplacer un second axe de façon à exercer une poussée sur le fond de cuvette (18) en sortant en saillie de l'extrémité (20) du premier axe (4),

8. Dispositif de fixation entre, deux éléments (1,2) selon la revendication 7, **caractérisé en ce que** l'alésage (22) est fileté, et **en ce que** le second axe est une vis filetée.

9. Dispositif de fixation selon l'une quelconque des revendications 6 ou 8, **caractérisé en ce** la cage (6) comporte sur sa base (16), une ouverture (24) de guidage de la cuvette (10).

10. Dispositif de fixation selon lune quelconque des revendications 6 à 9, **caractérisé en ce que** le carter (5) comporte une ouverture de guidage de la cuvette (10),

11. Dispositif de fixation selon l'une quelconque des revendications précédentes , **caractérisé en ce que** le premier élément (1) est une glissière de siège et le second élément (2) un plancher de véhicule automobile.
